(19) Europäisches Patentamt / European Patent Office / Office européen des brevets

(11) **EP 2 853 383 A1**

(12) **EUROPEAN PATENT APPLICATION**

(43) Date of publication:
**01.04.2015 Bulletin 2015/14**

(51) Int Cl.:
**B29C 70/52** (2006.01)     *H01L 29/78* (2006.01)

(21) Application number: **13186277.3**

(22) Date of filing: **27.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Bayer MaterialScience AG
51373 Leverkusen (DE)**

(72) Inventor: **The designation of the inventor has not yet been filed**

(74) Representative: **BIP Patents
c/o Bayer Intellectual Property GmbH
Creative Campus Monheim
Alfred-Nobel-Straße 10
40789 Monheim (DE)**

(54) **System and Method for Continuous Manufacturing of Composite Films**

(57)     The present invention provides a system design and manufacturing method for the continuous fabrication of flexible composite films by impregnating a backbone article with multiple-components resins. The system comprises essentially at least one impregnation part for impregnating a filler with a polymer resin composition and at least one shaping die assembly. Composite films made with the system and/or according to the method according to the present invention are particularly useful in applications such as opto-electronic devices.

FIG. 6

EP 2 853 383 A1

**Description**

The present invention relates to a system for continuous manufacturing of composite films. The present invention further relates to a method for continuous manufacturing of composite films, to an assembly comprising a composite film produced by said method and an electronic device comprising said assembly.

Glass panels have been widely used in displays as the substrates for the deposition of thin-film-transistors (TFT). The TFT deposited glass panels are the backplanes for liquid crystal displays, electrophoretic displays and organic light emitting diode displays. In addition, glass panels are also used to fabricate color filters, touch panels and solar cell substrates. Glass sheets have been widely used as substrate for opto-electronic device fabrication due to outstanding properties such as high temperature stability (> 400°C), low thermal expansion (< 10 ppm/°C), atomically smooth surface (Ra ≅ 1 nm), high optical transparency to visible light (> 90%), color neutral, and chemical resistance that enables glass to survive the high temperature device fabrication processes and various chemicals used in device fabrication. While glass sheets have been successfully used as the workhorse for opto-electronic device fabrication, its use is still not without any disadvantage. The main weakness for a glass sheet is its poor impact resistance, that is, it can break easily under mechanical force. Furthermore, the ever-evolving opto-electronic industry is continuously asking for thinner glass sheets to enable thinner devices. However, this development is limited since thinner glass sheets tend to break under even smaller loads. As a result, yield loss due to glass sheet break has become a bottleneck for the industry to further reduce the manufacturing cost.

Accordingly, in recent years, there has been considerable interest in using polymer substrates to replace glass panels for flat panel displays because of their advantages of being thin, light, robust and flexible. Furthermore, polymer substrates offer the possibility of reducing production cost due to the compatibility with the roll-to-roll process. There are a few polymer substrates commercially available, such as polycarbonate and co-polycarbonate (PC), polyether sulfone (PES), polyethylene terephthalate (PET), polyimide (PI) etc.

These polymers exhibit advantageous properties such as high impact resistance and high flexibility. Films prepared from these polymers can be fabricated using high throughput roll-to-roll process which enables majority of polymeric films to achieve lower manufacturing cost compared with a glass sheet of the same thickness. The performances of a polymeric film are rather complementary to those of a glass sheet. The main disadvantages of polymeric films are low temperature stability and high thermal expansion. Thus, composite films are being used wherein glass fibers are covered with a polymer matrix.

It is therefore desirable to produce a composite film comprising a filler such as glass fibers and a polymer matrix which exhibits a certain impact resistance, high flexibility, high temperature stability, low thermal expansion, high modulus, high chemical resistance and, important for certain applications, ultra-smooth surface in order to replace glass sheets as substrates for opto-electronic device fabrication.

However, to replace glass plates as substrates, polymer films must meet a few property requirements for display applications, which include high transmittance, low haze and birefringence, good thermal properties and chemical resistance, and a low coefficient of thermal expansion (CTE). Among these properties, the low CTE requirement is the most challenging as most amorphous polymer materials exhibit a high CTE. In the backplane fabrication, the TFT layers, typically inorganic materials with low CTEs, are directly deposited onto the substrate at high temperatures.

A mismatch of CTEs between the inorganic TFT layers and the substrate will result in severe stress and even cracking of the TFT layers. A few approaches have been adopted to reduce the CTEs of polymeric materials, which include the addition of nanoparticles and nanofibers, the composite approach using glass fiber reinforcement, and the syntheses of polyimides. Among these approaches, composite approach seems to be more promising due to its low cost and mature manufacturing technology.

For the fabrication of low CTE fiberglass reinforced transparent composite films, a few studies have been reported to develop specific matrix resins for the composite films. Typical matrices used to manufacture transparent composite films with a low CTE include cycloaliphatic epoxides as disclosed in WO 2010/104191, WO 2011/062290, US 2010/0216912, US 2010/0009149, US 7132154 B2 etc., acrylates as described in US 2007/0219309, US 7250209 etc., sol-gel as embodied in US 2010/0178478A1 and US 2011/0052890 A1 etc, and silsesquioxanes as claimed in TW 201041945 A1.

However, epoxy and acrylate matrices generally show coloration while composite films based on sol-gel matrices are easy to crack due to post cure at room temperature and exhibit low transmittance (US 2011/0052890 A1). Therefore, transparent composite films fabricated from the combination of fiberglass with the above-mentioned matrices still need improvements in transparency, colorlessness and cracking resistance.

Typically, in order to produce composite films, the filler such as fiber glass is impregnated with the polymeric matrix, the composite film is formed into the desired shape, followed by curing the polymeric resin using a certain energy source. There exist several methods for impregnating fibers or sheets with polymeric materials in continuous industrial processes. For example, pultrusion is a typical continuous manufacturing method to fabricate parts with constant cross-section. In pultrusion process, a bundle of fiber rovings is passed through a wet resin bath, squeezed into a desired shape, passed through a heated die, and cured into a final composite. The solidified composite, typically reinforced unidirectionally with continuous fibers or sometimes bidirectionally, is pulled by a puller to continuously feed the uncured portion of the wet fibers into the hot die. An injection box is normally used in pultrusion processes to do closed injection wet-out of reinforcing filler (fibers) for profile processing. Polyurethane resins have become a widely adopted resin of choice due to the fact that they do not contain volatile organic compounds (VOC's).

However, employing polyurethane resins gives rise to complications in continuous processes comprising the impregnation of filler materials. In particular, two component polyurethane resins usually employed in composite article fabrication normally have only short pot lives. The fast reactivity of the polyurethane resins causes the resin to gel while sitting to be impregnated to the filler. Hence, impregnation methods with large dead volumes such as resin baths cannot be used since the polyurethane resin will gel inside the resin bath container. On the other hand, when an injection box is used for impregnation, the inner volume of the injection box has to be minimized to eliminate dead volume where gelling of the resin would otherwise take place. This will dramatically increase the requirement for injection box inner geometry design and machining precision which in turn causes dramatic increase in the injection box manufacturing cost. Furthermore, it is much more complicated to take apart an injection box for routine cleaning/maintenance.

In summary, there is a need for composite films which exhibit at least some of the above-mentioned improvements necessary for a use in the production of opto-electronic devices. Furthermore, there is also a need for an efficient method to produce the desired composite films, in particular composite films having an improved surface finish.

Accordingly, the present invention provides a system for the continuous manufacture of composite films comprising a matrix and a filler at least partially embedded in the matrix, the system comprising

a) at least one impregnation part for impregnating the filler with a polymer resin composition;

b) at least one shaping die for controlling the surface texture and the thickness of the composite film; the shaping die comprising a slit assembly having a slit in the middle for the impregnated film to pass through, an entrance gap and an exit gap, wherein the gap opening of the entrance gap is greater than the gap opening of the exit gap, and a connection within the die between the entrance gap and the exit gap, the entrance gap and the exit gap being located on opposite sides of the shaping die.

In the system according to the present invention, the filler is first impregnated with the polymer matrix. The impregnated filler is then drawn through a shaping die that controls the thickness and the surface texture of the composite film, and then the impregnated filler can pass through curing stations to cure the matrix resin before it is rewound into a finished product roll.

Accordingly, a composite film comprising a polymeric matrix with glass fiber filler can be produced in a highly efficient manner. Moreover, an impact resistant and highly flexible substrate that has high temperature stability, low thermal expansion, high modulus, high chemical resistance and ultra-smooth surface can be provided. The composite film produced with the system according to the present invention has the potential to replace glass sheets as substrates for opto-electronic device fabrication.

In a preferred embodiment of the present invention, at least one impregnation part a) comprises a nip roller system or a knife-over-roll coater system. The nip roller system and the knife-over-roll coater system have the advantage of a minimized resin dead volume. In addition, they are easy to maintain and to clean. A further advantage resides in the low equipment cost. The reactive components of the polymer resin can be mixed inline right before being delivered to the impregnation station a) (impregnation part a)) to minimize the residual time of the polymeric resin sitting in the system. The impregnated filler can then have the option to pass through nip rollers to further spread the resin uniformly across the filler.

Preferably, the system according to the present invention is a continuous roll-to-roll manufacture system. A roll-to-roll manufacture system as understood in the art comprises a manufacture system, wherein the starting materials, are continuously fed to the system from rolls and wherein the final product is also continuously wound up on a respective roll. Since roll-to-roll manufacture systems allow for high throughput and high efficiency, a roll-to-roll manufacturing is a highly preferred advantageous embodiment of the present invention.

As outlined above, the impregnated filler is passed through the shaping die b) for controlling the surface texture and the thickness of the composite film. In particular, the shaping die is preferably a precisely machined slit assembly which will shape the cross section of the impregnated filler and the composite film. The shaping die or slit assembly has a gap opening in the middle for the impregnated filler to pass through. The gap is larger at the entrance side than at the exit side. Preferably, the exit side has the gap opening corresponding to the desired composite film thickness. It is further preferred that the inner surface of the gap, especially the inner surface of the exit gap, is machined to provide the desired surface finish for the composite film. Preferably, the gap is precisely machined with small tolerance such as $\pm 5\ \mu m$ all across the filler width. This has the effect that a uniform film thickness over the entire composite film width can be achieved. In particular, it is further preferred that the inner surface of the gap is highly polished. Highly polished within the present invention means having a roughness average Ra in the range of from ≥ 1 nm to ≤ 200 nm, preferably in the range of from ≥ 2 nm to ≤ 100 nm, more preferably in the range of from ≥ 5 nm to ≤ 50 nm. This has the effect that the surface of the composite film provided with a smooth or gloss surface, which has a particular relevance for applications in opto-electronic devices.

In a further preferred embodiment of the present invention, the system comprises two impregnation parts a) and two shaping dies b). This is particular useful in the roll-to-roll composite film fabrication system according to the present invention. For example, two identical impregnation apparatus are used. At a certain time, the first set of impregnation apparatus is in operation while the second set is on standby. That means, when the first set in operation requires cleaning and/or maintenance as usually occurring in industrial processes, the system can automatically engage the second set and disengage the first set for cleaning and/or maintenance. Such impregnation apparatus switching can take place without the need to stop the fabrication system from operation. The same design is preferably applied to the shaping die assembly b) so that the switching between the shaping die assemblies can take place online without the need to stop the fabrication system from operation. Hence, using two impregnation parts a) and two shaping dies b) wherein one of said components is in use while the respective other components is on standby has the advantageous effect that there is no need to stop fabrication when e.g. maintenance and/or cleaning is required, giving rise to a continuous and stable production process.

The system according to the present invention can further comprise a resin mixing device and dispenser, a filler film unwinder, a release carrier film unwinder, at least one drier, a composite film rewinder and a release carrier film rewinder. In this preferred embodiment, the reactive components for the polymer resin such as a two components polyurethane resin can be mixed right before being delivered to the impregnation apparatus to impregnate the filler, such as a glass fiber cloth. The resin dead volume at the impregnation apparatus is preferably minimized to avoid undesired resin gelation. The impregnation of the filler can be automatically switched between two identical impregnation apparatus for continuous operation. The filler can then be drawn through a shaping slit assembly, i.e., shaping die b), to achieve the desired film thickness, thickness uniformity, and surface quality. The shaping process can be automatically switched between two identical slit assemblies for continuous operation. The filler, in particular a glass fiber cloth can then be laminated with a release carrier film on one side or on both sides of the major surface to protect the not-yet-cured resin from being damaged when touching the rollers in the rest part of the line (such as the rollers in thermal dryers). The filler is further cured in the thermal dryers and then rewound up into a finished product roll. The release carrier film has the option of being peeled off for reuse before the composite film is rewound up into a finished product roll.

The present invention further provides a method for the continuous manufacture of a composite film, comprising the steps

-    preparing a resin composition for a matrix comprising polyurethane, epoxy, acrylates polyethylene, polycarbonate, co-polycarbonate, polyether sulfone, polyethylene terephthalate and/or polyimide;

-    providing a glass fiber fabric or non-woven glass cloth;

-    contacting said glass fiber fabric or non-woven glass fiber cloth with the resin composition by means of a system according to the present invention;

-    curing the resin composition.

In a preferred embodiment, the composite film may be in the form of one layer comprising a cross-linked polyurethane matrix and a glass filler. Alternatively, the composite film may comprise several layers of cross-linked polyurethane matrixes comprising glass fillers if so desired.

In its broadest form, the composite film according to the invention is formed by a cross-linked polyurethane polymer matrix composition and a glass filler.

A "cross-linked polyurethane polymer" is meant to be understood as a polymer comprising polyurethane polymer chains which form a three-dimensional network. This can be achieved, for example, by employing starting materials (-NCO compounds and/or -NCO-reactive compounds) with an average functionality of greater than two or by using chain extension agents for prepolymer chains with an (average) functionality of greater than two. Another example is to use reactive cross-linking groups in the polymer chain such as (meth)acrylate groups. One would then use the term "urethane (meth)acrylate".

On the isocyanate side, aliphatic polyisocyanates are preferred due to their light stability. Besides, it is also possible to employ proportionately modified diisocyanates having a uretdione, isocyanurate, urethane, allophanate, biuret, iminooxadiazinedione and/or oxadiazinetrione structure and unmodified polyisocyanates containing more than 2 -NCO groups per molecule, for example 4-isocyanatomethyloctane 1,8-diisocyanate (nonane triisocyanate) or triphenylmethane 4,4',4"-triisocyanate.

These are preferably polyisocyanates or polyisocyanate mixtures of the above-mentioned type containing exclusively aliphatically and/or cycloaliphatically bonded isocyanate groups and having an average NCO functionality of the mixture of 2 to 4.

Suitable polyols for the polyurethane formation include polyester polyols, polyacrylate polyols, polyurethane polyols, polycarbonate polyols, polyether polyols, polyester-polyacrylate polyols, polyurethane polyacrylate polyols, polyurethane polyester polyols, polyurethane polyether polyols, polyurethane polycarbonate polyols and polyester polycarbonate polyols known per se in polyurethane technology.

With respect to the properties of the polyol, it is advantageous that the -OH content is rather high, in particular ≥ 10 wt.-%, more preferred ≥ 12 wt.-% to ≤ 18 wt.-% and most preferred ≥ 13 wt.-% to ≤ 16 wt.-%. It has been found that when using polyols with a lower OH content the matrix material will become too soft. The hydroxyl content correlates with the hydroxyl number, which is available by titration of the polyol, according to the following equation known to a skilled person in the art:

$$\text{OH number} = (56100/1700)*\text{OH content}$$

Procedures for the determination of the -OH number may be found in the corresponding norms and standards such as DIN 53240.

Particularly considered is a polyester polyol having hydroxyl content of ≥ 10 wt.-%, more preferred ≥ 12 wt.-% to ≤ 18 wt.-% and most preferred ≥ 13 wt.-% to ≤ 16 wt.-%.

A typical resin composition for producing the matrix of the composite film according to the present invention comprises from 45-70 wt.-% of a polyisocyanate, preferably an aliphatic polyisocyanate such as HDI, THDI, H-MDI and IPDI, and their dimers and trimers from 25-45 wt.-% of a polyol compound, preferably a polyester polyol.

The term "glass" according to the present invention encompasses glass fibers. Glass fibers are well known in the art and are preferably used in the form of weavings, monofilaments and chopped short fibers.

The types of glass materials most commonly used in the art are mainly E-glass (alumino-borosilicate glass with less than 1% w/w alkali oxides, mainly used for glass-reinforced plastics), but also A-glass (alkali-lime glass with little or no boron oxide), E-CR-glass (alumino-lime silicate with less than 1% w/w alkali oxides, has high acid resistance), C-glass (alkali-lime glass with high boron oxide content, used for example for glass staple fibers), D-glass (borosilicate glass with high dielectric constant), R-glass (alumino silicate glass without MgO and CaO with high mechanical requirements), and S-glass (alumino silicate glass without CaO but with high MgO content with high tensile strength). T-glass is a North American variant of C-glass.

Whereas the total thickness of the composite film according to the invention is less than 500 μm (preferably 10-200 μm), its shape is not restricted per se. For example, planar and non-planar shapes are equally possible. A product designer has great freedom in his designs when using a composite film according to the invention.

If a glass fabric or glass cloth is employed, the thickness of said fabric or cloth plays a significant role in defining the preferred properties of the composite film. The thickness of the glass fabric is preferably in the range of 20-200 μm and the preferred thickness is 20-100 μm. If the thickness is within the preferred ranges, composite films having excellent CTEs, and exhibiting superior flexibility, crack resistance and transparency are obtained. Using fabrics and clothes of higher thicknesses will result in composite films of less flexibility.

Accordingly, in another embodiment of the composite film according to the invention the glass filler is present in form of glass fabrics having a thickness of 20 to 200 μm, preferably of ≥ 30 to ≤ 100 μm.

In another embodiment of the composite film according to the invention the polyurethane polymer has been prepared from a mixture comprising at least one aliphatic polyisocyanate and at least one polyester polyol.

In particular, the polyurethane can be prepared from a mixture comprising at least one of the following polyisocyanate compounds 1) and at least one of the following polyols 2):

1) Tetramethylene diisocyanate, hexamethylene diisocyanate (HDI), 2-methylpentamethylene diisocyanate, 2,2,4-trimethyl-hexamethylene diisocyanate (THDI), dodecanemethylene diisocyanate, 1,4-diisocyanatocyclohexane, 3-isocyanatomethyl-3,3,5-trimethylcyclohexyl isocyanate (isophorone diisocyanate = IPDI), 4,4'-diisocyanatodicyclohexylmethane (Desmodur® W), 4,4'-diisocyanato-3,3'-dimethyldicyclohexylmethane, 4,4'-diisocyanato-2,2-dicyclohexylpropane. For the purposes of modification, additional trimers, urethanes, biurets, allophanates or uretdiones of the above-mentioned diisocyanates can be used.

2) Polycondensates, known per se, of di- and optionally tri-and tetraols and di- and optionally tri-and tetracarboxylic acids or hydroxycarboxylic acids or lactones. Instead of the free polycarboxylic acids, it is also possible to use the corresponding polycarboxylic anhydrides or corresponding polycarboxylates of lower alcohols for the preparation of the polyesters.

Examples of suitable diols are ethylene glycol, butylene glycol, diethylene glycol, triethylene glycol, polyalkylene glycols, such as polyethylene glycol, furthermore 1,2-propanediol, 1,3-propanediol, 1,3-butanediol, 1,4-butanediol, 1,6-hexanediol and isomers, neopentyl glycol or neopentyl glycol hydroxypivalate, where 1,6-hexanediol and isomers, neopentyl glycol and neopentyl glycol hydroxypivalate are preferred. In addition, it is also possible to employ polyols, such as trimethylolpropane, glycerol, erythritol, pentaerythritol, trimethylolbenzene or trishydroxyethyl isocyanurate.

Dicarboxylic acids which can be employed are phthalic acid, isophthalic acid, terephthalic acid, tetrahydrophthalic acid, hexahydrophthalic acid, cyclohexanedicarboxylic acid, adipic acid, azelaic acid, sebacic acid, glutaric acid, tetrachlorophthalic acid, maleic acid, fumaric acid, itaconic acid, malonic acid, suberic acid, 2-methylsuccinic acid, 3,3-diethylglutaric acid and/or 2,2-dimethylsuccinic acid. The corresponding anhydrides can also be used as acid source.

Preferred acids are aliphatic or aromatic acids of the above-mentioned type. Particular preference is given to adipic acid, isophthalic acid and optionally trimellitic acid.

Other monomers such thiols and amines that can react with aliphatic isocyanates to form transparent matrices can also be used.

In another embodiment of the composite film according to the invention the polyurethane polymer has been prepared from unsaturated polyurethane based resins. Unsaturated polyurethane based resins generally comprise acrylate-modified polyurethanes. These are known, for example, from WO-A-2008125200. Such unsaturated polyurethane based resins are obtainable, for example, by reacting A) polyisocyanates, B) isocyanate-reactive block copolymers, and C) compounds having groups which react on exposure to actinic radiation with ethylenically unsaturated compounds with polymerization (radiation-curing groups).

In component C), alpha,beta-unsaturated carboxylic acid derivatives, such as acrylates, methacrylates, maleates, fumarates, maleimides, acrylamides and furthermore vinyl ethers, propylene ether, allyl ether and compounds containing dicyclopentadienyl units and olefinically unsaturated compounds, such as styrene, alpha-methylstyrene, vinyltoluene, vinylcarbazole, olefins, such as, for example, 1-octene and/or 1-decene, vinyl esters, such as, for example, (meth)acrylonitrile, (meth)acrylamide, methacrylic acid, acrylic acid and any desired mixtures thereof may be used. Acrylates and methacrylates are preferred, and acrylates are particularly preferred.

Esters of acrylic acid or methacrylic acid are generally referred to as acrylates or methacrylates. Examples of acrylates and methacrylates which may be used are methyl acrylate, methyl methacrylate, ethyl acrylate, ethyl methacrylate, ethoxyethyl acrylate, ethoxyethyl methacrylate, n-butyl acrylate, n-butyl methacrylate, tert-butyl acrylate, tert-butyl methacrylate, hexyl acrylate, hexyl methacrylate, 2-ethylhexyl acrylate, 2- ethylhexyl methacrylate, butoxyethyl acrylate, butoxyethyl methacrylate, lauryl acrylate, lauryl methacrylate, isobornyl acrylate, isobornyl methacrylate, phenyl acrylate, phenyl methacrylate, p-chlorophenyl acrylate, p-chlorophenyl methacrylate, p-bromophenyl acrylate, p-bromophenyl methacrylate, trichlorophenyl acrylate, trichlorophenyl methacrylate, tribromophenyl acrylate, tribromophenyl methacrylate, pentachlorophenyl acrylate, pentachlorophenyl methacrylate, pentabromophenyl acrylate, pentabromophenyl methacrylate, pentabromobenzyl acrylate, pentabromobenzyl methacrylate, phenoxyethyl acrylate, phenoxyethyl methacrylate, phenoxyethoxyethyl acrylate, phenoxyethoxyethyl methacrylate, 2-naphthyl acrylate, 2-naphthyl methacrylate, 1,4-bis-(2-thionaphthyl)-2-butyl acrylate, 1,4-bis-(2-thionaphthyl)-2-butyl methacrylate, bisphenol A diacrylate, bisphenol A dimethacrylate, tetrabromobisphenol A diacrylate, tetrabromobisphenol A dimethacrylate, 2,2,2-trifluoroethyl acrylate, 2,2,2-trifluoroethyl methacrylate, 1,1,1,3,3,3-hexafluoroisopropyl acrylate, 1,1,1,3,3,3-hexafluoroisopropyl methacrylate, 2,2,3,3,3-pentafluoropropyl acrylate and/or 2,2,3,3,3-pentafluoropropyl methacrylate.

When a particular smooth surface of the composite film is required, it can be advantageous to provide the film with a coating layer which does not comprise any glass filler. The coating layer is preferably the same cross-linked polyurethane as the cross-linked polyurethane matrix of the corresponding composite film, but without said glass filler. Hence, in another embodiment of the film according to the invention the film may further comprise at least one coating layer. This coating layer is not included in the calculation of the film thickness. As a coating layer, any planarizing substance may be used. For reasons of chemical compatibility, it is preferred that the coating layer comprises the polyurethane polymer of the matrix material.

With respect to the curing step, in one embodiment of the method according to the invention the curing step comprises thermal curing and/or radiation curing. For example, "dual cure" systems may be employed where a prepreg is thermally treated for easier processing and then radiation hardened to give the final product.

In a particular preferred embodiment of the present invention, the curing step comprises a first heating step to a first temperature and a second heating step to a second temperature, wherein the second temperature is higher than the first temperature. This two step thermal curing has the effect that a particular defect free composite film can be obtained. Defect free means in this conjunction a film free of bubbles and voids. When Component A (isocyanate) reacts with Component B (mainly polyol) to form a PUR matrix, it generates carbon dioxide ($CO_2$) as a by-product. Furthermore, moisture and air trapped in the resin composition may outgas when the resin is heated up. Thus, it is preferred to first heat the still wet composite film to a relatively low first temperature in a first heating step, preferably in the range of from 100 to 170 °C, more preferably in the range of from 120 to 160 °C. This has the effect of lowering the viscosity of the resin to facilitate the outgassing of carbon dioxide, moisture, and air. The lowered viscosity of the still wet resin also helps the resin to infiltrate the space between the glass fibers to eliminate voids. Furthermore, the lowered viscosity can help the still wet resin to level out at the composite film surface to provide a smooth surface. Following the low temperature thermal treatment of the first heating step at the first temperature, the composite film is then heated in a second heating step to a higher second temperature, preferably in the range of from 170 °C to 260 °C, more preferably in the range of from 190 to 230 °C to completely cure the PUR resin. In summary, the first heating step lowers the viscosity of the resin, thereby facilitating outgassing and infiltration of the filler, such as glass fibers, giving rise to a defect free composite film having a smooth surface. The second step cures the resin composition.

It is possible to employ a support or substrate when contacting the glass material with the resin composition. In another embodiment of the method according to the invention the contacting said glass fabric or non-woven glass cloth with the resin composition is conducted on a support and the support is a release film. This represents a very efficient means for manufacturing the composite film according to the present invention. A release film may be a PTFE- or silicone-impregnated fabric or paper.

In another embodiment of the method according to the invention the resin composition comprises at least one aliphatic polyisocyanate and at least one polyester polyol. Preference is given to a polyester polyol having hydroxyl content of $\geq$ 10 wt.-%, more preferred $\geq$ 12 wt.-% to $\leq$ 18 wt.-% and most preferred $\geq$ 13 wt.-% to $\leq$ 16 wt.-%.

In a particular preferred embodiment of the method according to the present invention, a resin composition comprising of from 55 to 70 wt.-% of aliphatic polyisocyanates, from 25 to 40 wt.-% of a polyester polyol and from 0.01 to 0.05 wt. % of a defoamer is used, followed by placing a glass fabric or glass cloth having a thickness of from 15 to 80 $\mu$m on a substrate, preferably a PTFE coated release fabric, coating the glass fabric or glass cloth with the resin composition and curing the composition. This yields a composite film having a light transmittance of more than 80 %, a coefficient of thermal expansion of less than 20 ppm/K and a thickness of less than 200 $\mu$m.

The invention is also concerned with an assembly comprising a support and an optical element supported by the support, wherein the support comprises a composite film comprising a matrix and a glass filler at least partially embedded in the matrix, wherein the matrix comprises a cross-linked polyurethane polymer and wherein the composite film has a light transmittance of more than 80 %, a coefficient of thermal expansion of less than 40 ppm/K and a thickness of less than 500 $\mu$m.

Regarding the assembly according to the invention, it is preferred that the composite film is a composite film according to the invention.

In another embodiment of the assembly according to the invention the optical element is a liquid crystal element, a color filter, a touch panel element, an electroluminescent element, a light emitting diode, an organic light emitting diode, an electrophoretic display element, a thin film transistor, a lens element or a photovoltaic element.

Lastly, the invention is directed towards an electronic device comprising an assembly according to the invention.

Description of the Drawings

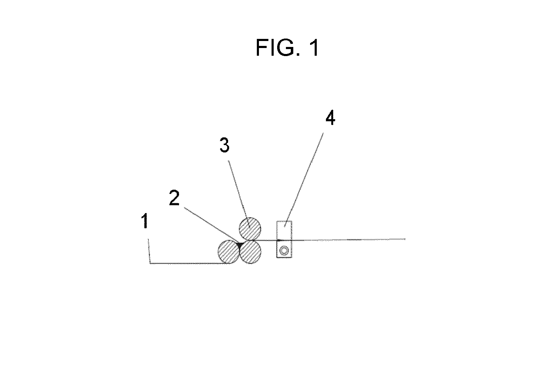

Fig. 1 depicts a schematic overview over the system according to the present invention. It shows a glass cloth (1) which is impregnated in the impregnation part a) (a nip roller assembly (3) is shown), wherein a polymer resin composition is applied as a liquid puddle (3) in the roller assembly (3). The rollers in the impregnation part a) (3) squeeze and spread the liquid polymer composition across the glass cloth (1). Advantageously, the surface of the rollers in assembly (3) can be covered with a Teflon sleeve for easy cleaning. In shaping die b) (4) the coating thickness, thickness uniformity and surface quality of the composite film is controlled.

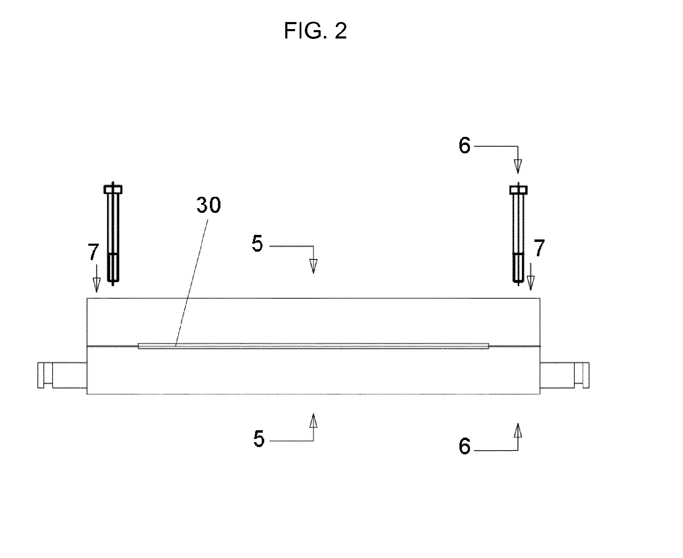

Fig. 2 shows a schematic front view of an embodiment of shaping die b). It essentially comprises a slit assembly having an opening (30) on entrance side between points (5). It further comprises bolts (7) located close to the edges (6) of the assembly. The gap between the upper and lower part of the slit assembly may, for example, comprise an opening (30) of 4 mm on the entrance side and 80 $\mu$m on the exit side (not shown in this figure).

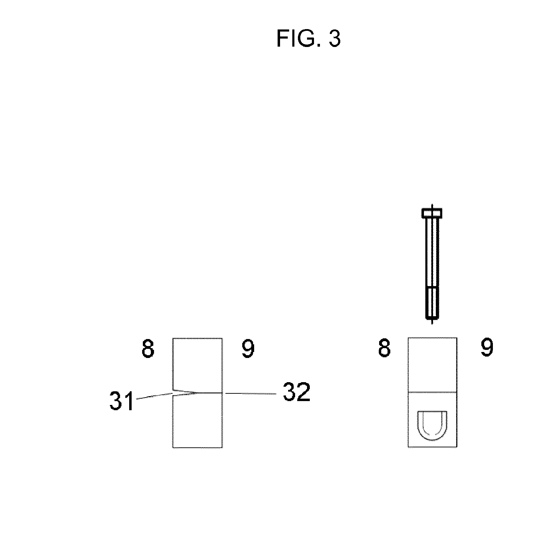

Fig. 3 is the schematic side view of the slit assembly shown in fig.2. The left side view shows the cross-section at location (5) and the right side view shows the cross-section at location (6) between the entrance (8) and the exit (9) of the assembly. The side view of cross-section at location (5) further shows the opening gap (31) at the entrance side and the exit gap (32) at the exit side of the assembly and the notable difference of the gaps.

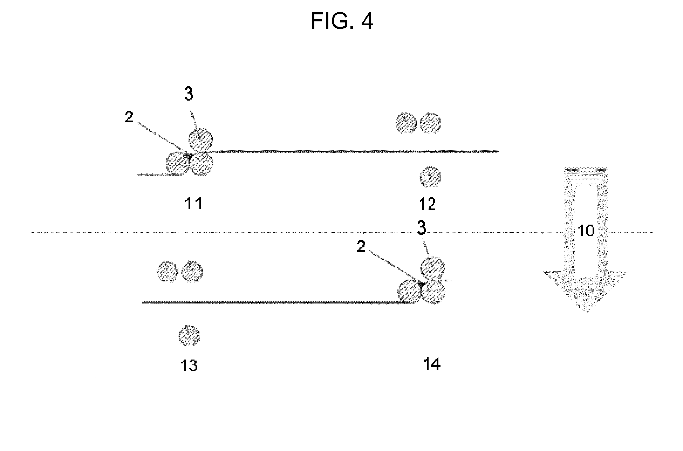

Fig. 4 shows a preferred embodiment of the system according to the present invention. It comprises two impregnation apparatus for the roll-to-roll composite film fabrication system. Two sets of identical impregnation apparatus are used. At a certain time, the first set of impregnation apparatus is in operation (11) while the second set is in standby (12). As impregnation apparatus, a nip roller system ((2), (3)) is shown. When the first set in operation (11) requires cleaning and/or maintenance, the system can automatically (switch (10)) engage the second set (14) and disengage the first set (13).

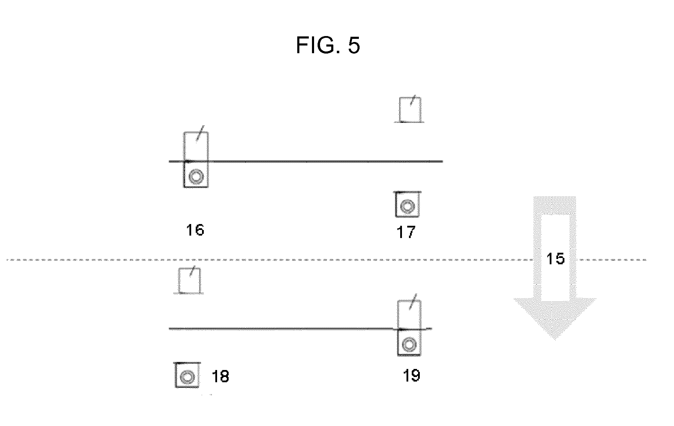

Fig. 5 shows the same design as depicted in Fig. 4 applied to the shaping die b), i.e., the shaping slit assembly. In this preferred embodiment of the present invention, slit 1 is in service (16) while slit 2 is on standby (17). The system can automatically (switch (15)) engage the slit 2 (19) and disengage slit 1 (18).

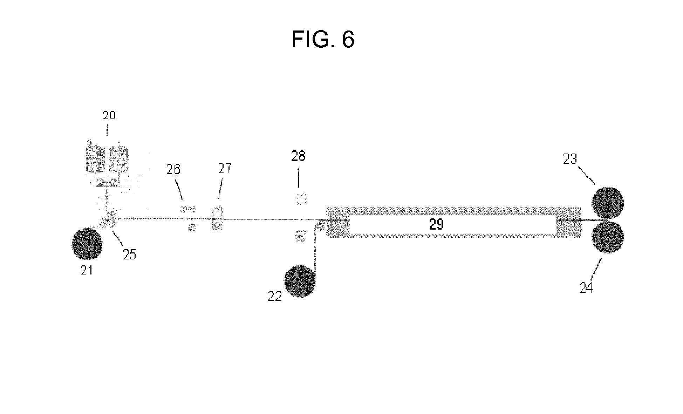

Fig. 6 depicts an overall system design for a roll-to-roll composite film fabrication line. For instance, a two-components polyurethane resin as polymeric matrix and a glass cloth as reinforcing filler can be used. The reactive components for the two-component polyurethane resin are mixed in an inline reactive components mixing apparatus (20) right before being delivered to the first impregnation apparatus (25) to impregnate the glass cloth filler which starts its way through the system at the glass cloth unwinder (21). The second impregnation apparatus (26) is on standby according to a preferred embodiment of the present invention. After impregnation with the polyurethane resin, the impregnated glass cloth is drawn through the shaping slit assembly (27) to achieve the desired film thickness, thickness uniformity, and surface quality. According to a preferred embodiment of the present invention, the shaping process can be switched automatically between two identical slit assemblies (27, 28) for continuous operation. The impregnated and shaped glass cloth can then be laminated with a release carrier film (from the release carrier unwinder (22)) on one side or on both sides of the major surface to protect the not-yet-cured resin from being damaged when touching the rollers in the rest part of the line (such as the rollers in thermal dryers). Finally, the impregnated glass cloth is further cured in thermal dryers, preferably several dryers located in position (29) and then rewound up into a finished product roll (23). Preferably, the release carrier film is separated from the finished product film and rewound on the release carrier film rewinder (24).

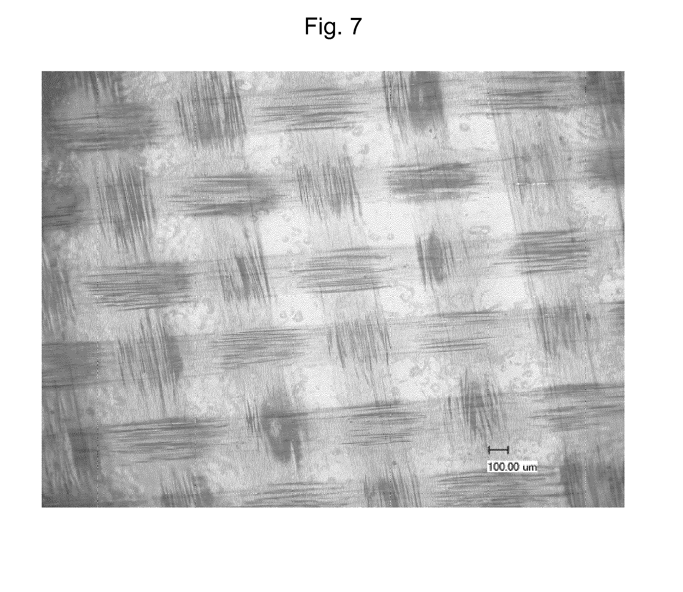

Fig. 7 is an optical microscopy photo of the air side of the composite film according to the present invention,

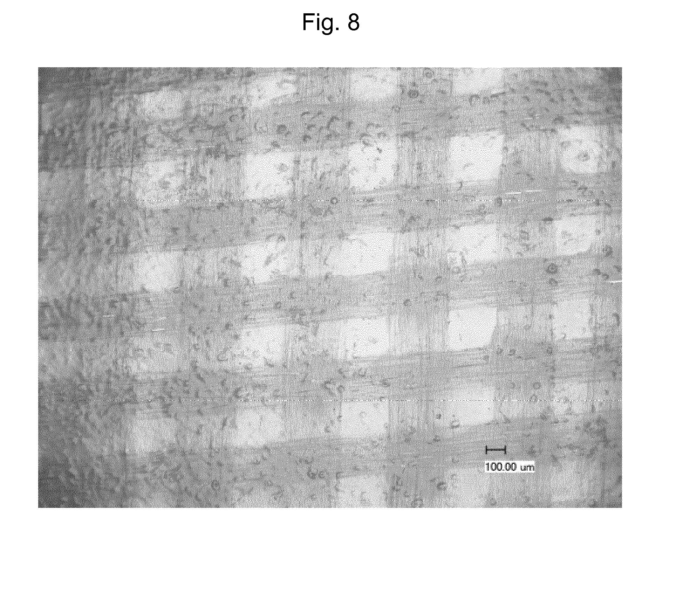

Fig. 8 is an optical microscopy photo of the carrier side of the same composite film.

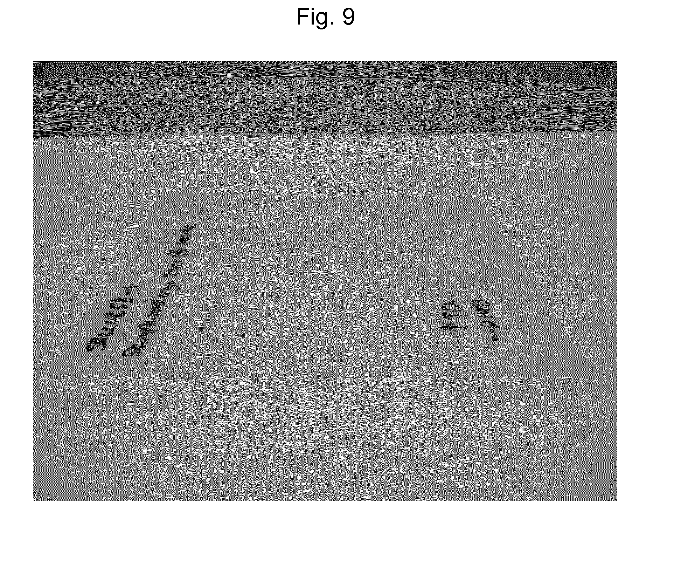

Fig. 9 represents a photo of a composite film according to example 1 of the present invention, showing that the film is flat without any curling. A stress free flat film is critical for an application as substrate for opto-electronics device fabrication.

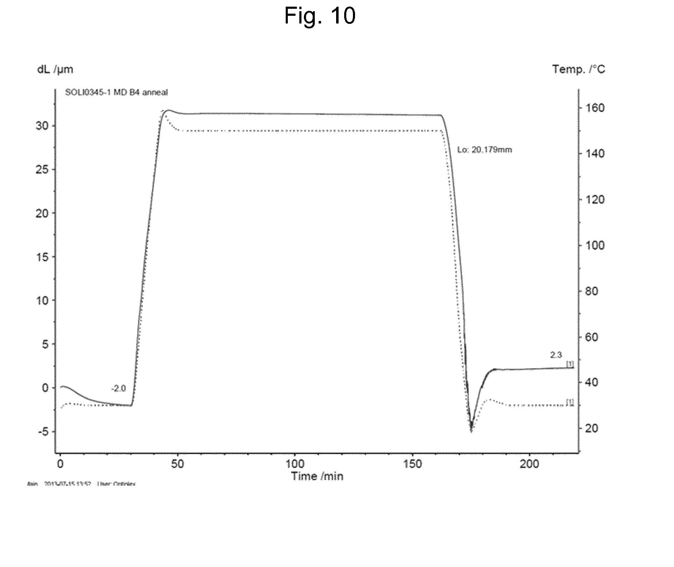

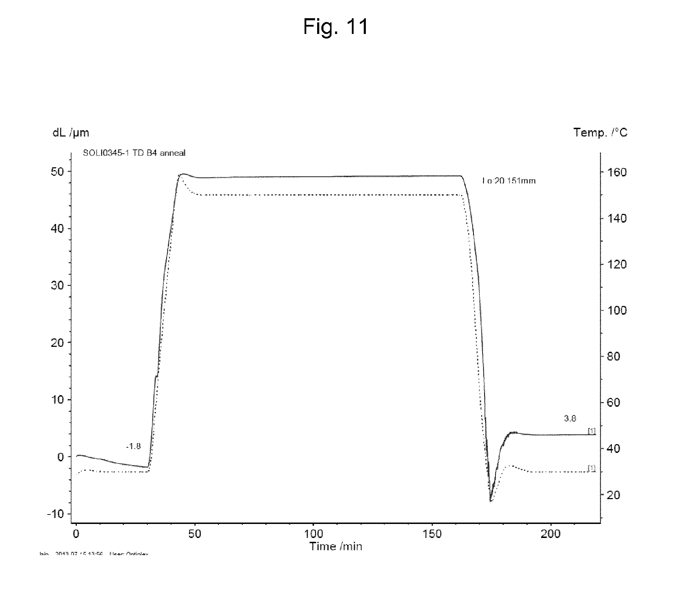

Fig. 10 and 11 show the thermal mechanical analysis (TMA) results of the composite film in both machine direction and transverse direction (cross the web direction). From the TMA results, the coefficient of thermal expansion (CTE) of the composite film is calculated to be 15 ppm/°C in both machine direction and transverse direction. The thermal shrinkage of the composite film at 160 °C is -122 ppm/hour in the machine direction and 22 ppm/hour in the transverse direction.

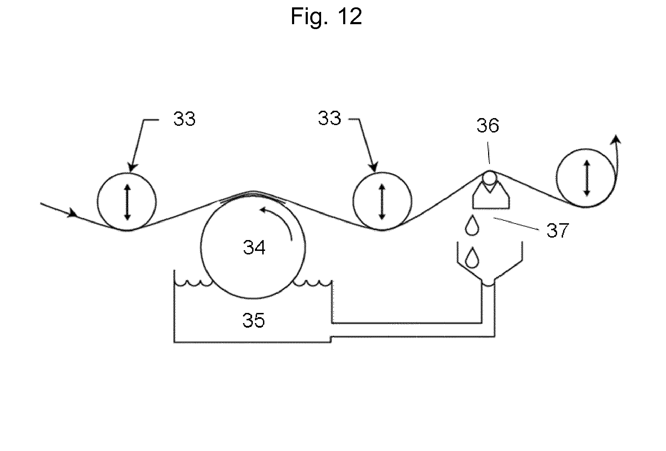

Fig. 12 shows a further preferred embodiment of the method according to the present invention, i.e, the application of a planarization coating formulation. Depicted is a reverse kiss coat method combined with a Mayer rod to precisely control the coating thickness. In particular, both sides of the composite film are coated with a planarization coating which has the same PUR composition as that of the composite film polymer matrix. The film is transferred between height adjustable hold down rolls (33) over the kiss roll (34), which is in contact with the coating reservoir (35) to coat the composite film with the coating composition. The film is further transferred over the Mayer rod (36) which is located in the rod bed (37). The coating composition collected by the Mayer rod (36) is then transferred back to the coating reservoir (35).

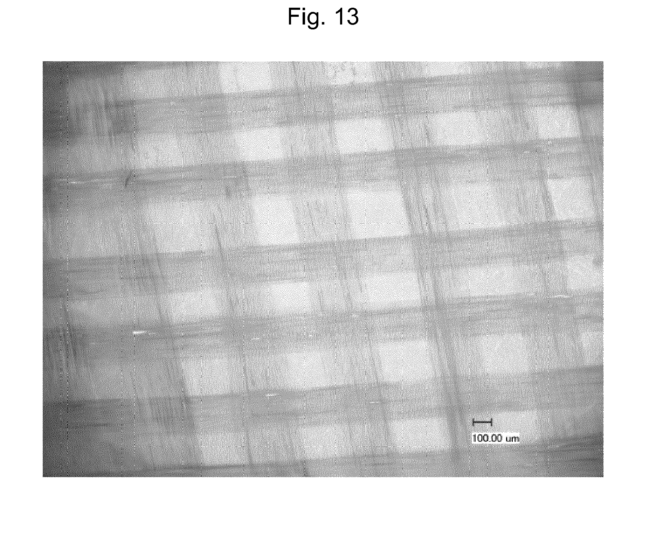

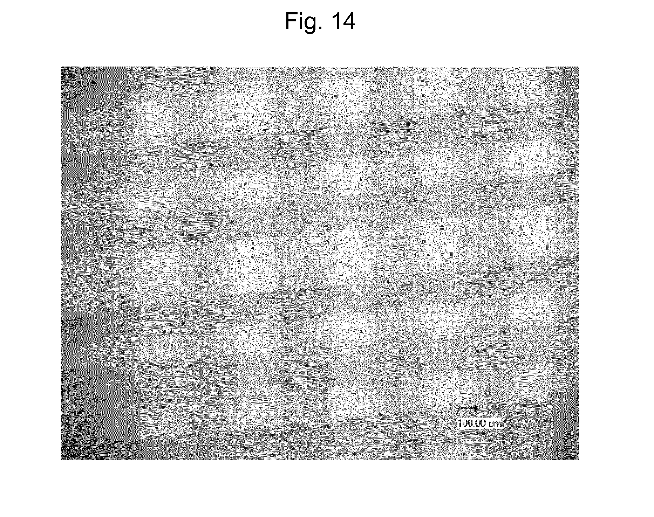

Fig. 13 and 14 are the optical microscopy photos of the double side planarized composite film according to example 2 showing the planarized air side and planarized carrier side. Compared with the microscopy photos (fig. 7 and fig. 8) of the composite film according to example 1, the surface smoothness of both sides of the composite film is significantly improved.

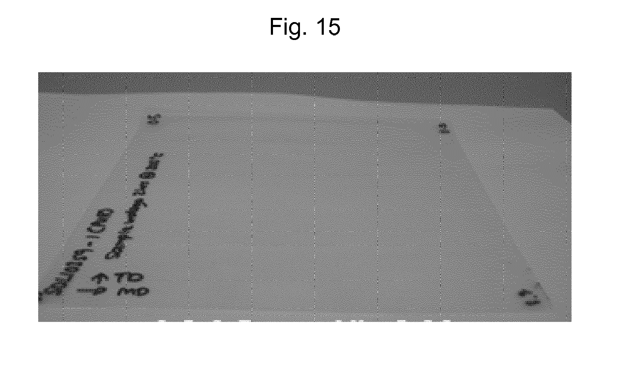

Fig. 15 is a photo of free standing double side planarized composite film according to example 2 showing that it is flat without any curling. A stress free flat film is critical for application as substrate for opto-electronic device fabrication. The double side planarized composite film has a yellow index (YI) of 1.20, similar to that of as-fabricated composite film according to example 2.

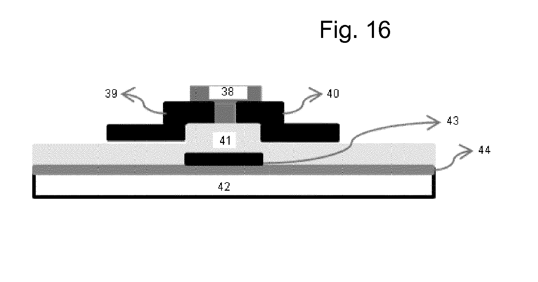

Fig. 16 shows a cross section of a thin film transistor (TFT) as obtainable in example 3. Depicted are the planarized composite film according to example 2 (42), the $Al_2O_3$ barrier layer (44), the gate (43), the gate insulator (41), the IGZO channel layer (38) as well as the source (39) and the drain (44).

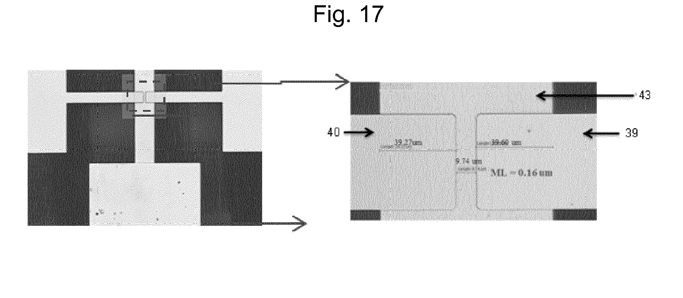

Fig. 17 shows on the left hand a thin film transistor (TFT) on the planarized composite film according to example 3 and on the right hand an optical microscopy photo of the channel area which shows good alignment between the gate electrode (43) and the source (39)/drain (40) electrode. The misalignment is only 0.16 $\mu$m.

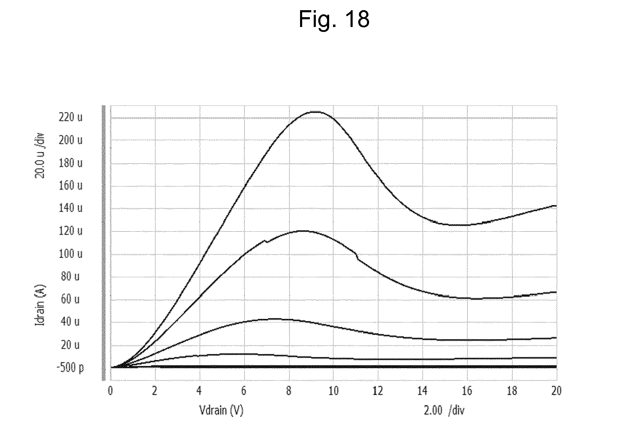

Fig. 18 is the drain I-V curve with various gate bias voltage of the TFT device on planarized composite film. The mobility of IGZO channel is calculated to be 56 cm$^2$/V·s with on/off ratio larger than 10$^6$. This IGZO TFT performance is comparable to that of a state-of-the-art TFT device built on a glass or silicone substrate.

**Examples**

Example 1: Composite Film fabrication

1. Formulation:

A two-component polyurethane (PUR) formulation is used to prepare the polymer matrix.

Component A is of Desmodur® N 3900 from Bayer MaterialScience which is a low-viscosity aliphatic polyisocyanate resin based on hexamethylene diisocyanate (HDI).

Component B is composed of 1) Desmophen® VP LS 2249/1 from Bayer MaterialScience which is a branched short-chain polyester polyol 2) Irganox® 1010 from BASF SE which is a phenolic primary antioxidant for processing and long-term thermal stabilization and 3) Butyl Tin Tris(2-Ethyl Hexanoate) (BTTEH) which is used as a catalyst.

Component B was prepared by first mixing all ingredients at predetermined ratio using Dispermat® CN dissolver at a speed of 1500 rpm for 20 minutes. The mixed Component B formulation was then heated in a conventional oven at 130 °C for 2 hours followed by outgassing for 3 hours in vacuum at pressure lower than 150 mbar.

2. Glass fabric:

The glass fabric (filler) used was HP-P50EF from HP Textiles. HP-P50EF is a plain E-glass cloth with 48 g/m$^2$ weight density and a thickness of 50 $\mu$m.

3. Release carrier film:

The release carrier film used was a TPX® Polymethylpentene (PMP) coated release paper from Felix Schoeller.

4. roll-to-roll composite film fabrication

The roll-to-roll continuous composite film fabrication was carried out on a custom designed roll-to-roll pilot wet coating line. The Component A and Component B formulations were continuously pumped using progressive cavity pumps (Netzsch Nemo® NM) at a predetermined flow rates into the inline static mixer (Turbo Disposable Plastic Bell Mixer from Nordson EFD). The mixed PUR was then delivered to the impregnation bar which impregnates the glass cloth with the PUR mixture.

The impregnated glass cloth then went between two nip rollers that uniformly squeeze and spread the PUR mixture all across the width of the glass cloth. After it passed the nip rollers, the impregnated glass cloth was drawn through the slit with predetermined exit slit gap of 100 $\mu$m (Figure 7). This results in a composite film with uniform polymer matrix of 100 $\mu$m wet film thickness.

The still wet composite film was then assembled with the release carrier film before the assembly goes into forced hot air thermal dryers. The composite film went through 10 minutes of 140 °C thermal curing followed by another 5 minutes thermal curing at 200 °C. Such two steps thermal curing was found to be critical for achieving defect free PUR composite film. Defect free means in this conjunction a film free of bubbles and voids. When Component A (isocyanate) reacts with moisture in Component B (mainly polyol), it generates carbon dioxide ($CO_2$) as a by-product. Furthermore, air trapped in the formulation will outgas when the resin is heated up. Thus it was critical to first heat the still wet composite film to relatively low temperature (140 °C) which lower the viscosity of the resin to facilitate the outgassing of carbon dioxide, moisture, and air. The lowered viscosity of the still wet resin also helped the resin to infiltrate the space between the glass fibers to eliminate voids. Furthermore, the lowered viscosity can help the still wet resin to level out at the composite film surface to provide a smooth surface. Following the low temperature thermal treatment, the composite film was then heated to a higher temperature (200 °C) to completely cure the PUR resin.

The fully cured composite film was then rolled up as a completed product. The fully cured composite film had uniform thickness of 72 ± 2 μm across the whole web width (27 cm).

Fig. 7 and Fig. 8 are the optical microscopy photos of the composite film showing the air side and the carrier side (in contact with release carrier film). No defect (bubble or void) was observed in the composite film.

Fig. 9 is a photo of free standing as-fabricated composite film showing that it is flat without any curling. A stress free flat film is critical for application as substrate for opto-electronic device fabrication.

The optical properties of the composite film were measured using a HunterLab UltraScan Pro Spectrophotometer. The color of the film was illustrated using CIE 1976 color space (L*, a*, b*). The yellow index (YI) of the film was measured using ASTM E313 protocol. Table 1 shows the optical properties of the composite film which has low yellow index.

Table 1: Optical properties of the composite film measured by spectrometer.

| L* | a* | b* | YI |
|---|---|---|---|
| 94.41 | -0.05 | 0.63 | 1.15 |

Fig. 10 and Fig. 11 show the thermal mechanical analysis (TMA) results of the composite film in both machine direction and transverse direction (cross the web direction). From the TMA results, the coefficient of thermal expansion (CTE) of the composite film was calculated to be 15 ppm/°C in both machine direction and transverse direction. The thermal shrinkage of the composite film at 160 °C is -122 ppm/hour in the machine direction and 22 ppm/hour in the transverse direction.

Table 2 shows the mechanical properties of the composite film measured by Instron® 5569 Universal Tester. The mechanical test was carried out at 26 °C and 57% relative humidity (RH). The mechanical properties were measured for both the machine direction (MD) and transverse direction (TD) of the composite film.

Table 2: Mechanical properties of composite film measured by Instrom® 5569 Universal Tester.

| Property | Unit | TD | MD |
|---|---|---|---|
| Modulus (Young's Cursor) | (G Pa) | 8.450 | 12.216 |
| Max Tensile Stress | (M Pa) | 160.698 | 198.106 |
| Tensile Stress at Break (Cursor) | (M Pa) | 160.650 | 197.099 |
| Tensile Strain at Break (Cursor) | (%) | 2.062 | 1.765 |
| Extension at Break(Cursor) | (mm) | 0.733 | 0.653 |
| Tensile Stress at yield (Offset 0,1%) | (M Pa) | 131.353 | 176.120 |
| Tensile Strain at Yield (Offset 0.1%) | (mm/mm) | 0.017 | 0.015 |

The moisture absorption property of the composite film was evaluated using ISO 62:2008 protocol. The composite film was dried at 50 °C for 24 hours before testing at 23 °C 50 %RH for 28 days. The moisture absorption of the composite film was measured to be 0.37 wt.%.

Example 2: Coating of the Composite Film Surface with Planarization Coating

For opto-electronic device fabrication, such as thin film transistor (TFT), an extra special smooth surface is required. Thus, the composite film surface as obtained in example 1 can be coated with a planarization coating in order to reduce the surface roughness down to levels acceptable for fabrication of TFTs.

1. Planarization Coating Formulation:

The planarization coating has the same PUR composition as that of the composite film polymer matrix. To be more specific, the planarization coating formulation was prepared by mixing Component A and Component B of the PUR polymer matrix with solvent (propylene glycol monomethyl ether (PGME)).

2. Planarization Coating Process:

Both sides of the composite film were then coated with the planarization coating formulation in the same custom designed roll-to-roll pilot wet coating line. The coating method used was reverse kiss coat combined with Mayer Rod to control the planarization coat thickness (Fig. 12). The Mayer Rod used was aimed to achieve 20 $\mu$m thick wet coating uniformly all over the composite film.

The wet coating was then dried and thermally cured at 150 °C for 5 minutes followed by 200 °C for 2.5 minutes.

3. Properties of Double Side Planarized Composite Film:

Fig. 13 and Fig. 14 are the optical microscopy photos of the double side planarized composite film showing the planarized air side and planarized carrier side. Compared with the microscopy photos of the composite film of example 1, the surface smoothness of both sides of the composite film is significantly improved.

The double side planarized composite film is flat without any curling. A stress free flat film is critical for application as substrate for opto-electronic device fabrication. The double side planarized composite film has a yellow index (YI) of 1.20, similar to that of as-fabricated composite film (see Table 1).

During opto-electronic device fabrication, the substrate will go through certain high temperature processes for drying or baking or deposition. Thus it is important for the substrate to maintain its original properties after such high temperature process. A 200°C heating for 2 hours was used to mimic such high temperature process. Fig. 15 is a photo of the double side planarized composite film after heating at 200 °C for 2 hours which clearly shows that the film is still flat (stress free). The yellow index of the planarized composite film increased slightly to 2.33 after such heat treatment.

White light interferometer (Bruker Contour GT-K) was used to evaluate the planarized film surface morphology at a magnification of 50 times. The Ra of the planarized carrier side of the composite film is improved to 30 nm (compared with 179 nm of the composite film obtained in example 1)) and the Ra of the planarized air side of the composite film is improved to 110 nm (compared with 397 nm of the composite film obtained in example 1).

Example 3: TFT on planarized Composite Film

1. Thin Film Transistor Fabrication Processes:

Bottom gate thin film transistors (TFTs) (Fig. 16) are fabricated on the planarized carrier side of the composite film using industrial standard processes. The substrate (planarized composite film obtained in example 2) was first cleaned and dried in vacuum oven at 180 °C. The substrate was then coated with 18 nm thick $Al_2O_3$ barrier layer using atomic layer deposition (ALD). Aluminum gate electrodes were deposited using e-beam evaporation and patterned using photolithography. Gate insulator (GI) layer was made from spin coated methyl siloxane with thickness of 340 nm. Aluminum source and drain electrodes were deposited using e-beam evaporation and patterned using photolithography. The channel layer was made from sputtered IGZO (indium gallium zinc oxide) with thickness of 35 nm and patterned using photoresist lift off process.

2. Property of Thin Film Transistors on Planarized Composite Film:

Fig. 17 (a) shows a thin film transistor (TFT) on the planarized composite film. Fig. 17 (b) is an optical microscopy photo of the channel area which shows good alignment between the gate electrode and the source/drain electrode. The misalignment is only 0.16 $\mu$m.

Fig. 18 shows the drain I-V curve with various gate bias voltage of the TFT device on planarized composite film. The mobility of IGZO channel was calculated to be 56 cm$^2$/V·s with on/off ratio larger than $10^6$. This IGZO TFT performance is comparable to that of the state-of-the-art TFT device built on glass or silicone substrate.

**Claims**

1. System for the continuous manufacture of composite films comprising a matrix and a filler at least partially embedded in the matrix, the system comprising

   a) at least one impregnation part for impregnating the filler with a polymer resin composition;
   b) at least one shaping die for controlling the surface texture and the thickness of the composite film; the shaping die comprising a slit assembly having a slit in the middle for the impregnated film to pass through, an entrance gap and an exit gap, wherein the gap opening of the entrance gap is greater than the gap opening of the exit gap, and a connection within the die between the entrance gap and the exit gap, the entrance gap and the exit gap being located on opposite sites of the shaping die.

2. System according to claim 1, wherein at least one impregnation part a) comprises a nip roller system or a knife-over-roll coater system.

3. System according to claim 1 or claim 2, wherein the system is a continuous roll-to-roll manufacture system.

4. System according to any one of the preceding claims, wherein the filler comprises a glass fiber fabric or a non-woven glass fiber cloth and the polymer resin comprises a polyurethane resin.

5. System according to any one of the preceding claims, wherein the inner surface of the gap is machined to provide the composite film surface finish.

6. System according to claim 5, wherein the inner surface of the gap has a Ra in the range of from $\geq 1$ nm to $\leq 200$ nm, preferably in the range of from $\geq 2$ nm to $\leq 100$ nm, more preferably in the range of from $\geq 5$ nm to $\leq 50$ nm.

7. System according to any one of the preceding claims, comprising two impregnation parts a) and two shaping dies b).

8. System according to claim 7, wherein one of each components a) and b) is in use while the respective other component is on standby.

9. System according to any one of the preceding claims, further comprising a resin mixing device and dispenser, a filler film unwinder, a release carrier film unwinder, at least one drier, a composite film rewinder and a release carrier film rewinder.

10. Method for the continuous manufacture of a composite film, comprising the steps

- preparing a resin composition for a matrix comprising polyurethane, epoxy, acrylates, polyethylene, polycarbonate, co-polycarbonate, polyether sulfone, polyethylene terephthalate and/or polyimide;
- providing a glass fiber fabric or non-woven glass cloth;
- contacting said glass fiber fabric or non-woven glass fiber cloth with the resin composition by means of a system according to any one of claims 1 to 9;
- curing the resin composition.

11. Method according to claim 10, wherein the resin composition is a resin composition for a cross-linked polyurethane matrix, the resin composition comprising a polyisocyanate, preferably an aliphatic polyisocyanate, a polyol and optionally a defoamer, a thermostabilizer and a wetting agent.

12. Method according to claim 10 or claim 11, wherein the glass fiber fabric or cloth has a thickness in the range of from 10 to 200 $\mu$m.

13. Method according to any of claims 10 to 12, wherein contacting said glass fiber fabric or non-woven glass fiber cloth with the resin composition is conducted on a support and the support is a release film.

14. Method according to any one of claims 10 to 13, wherein the curing step comprises a first heating step of heating the composite film to a first temperature and a subsequent second heating step to a second temperature, wherein the second temperature is higher than the first temperature.

15. An assembly comprising a support and an optical element supported by the support, wherein the support comprises a composite film obtained by the method according to any one of claims 10 to 14, wherein the optical element is a liquid crystal element, a color filter, a touch panel element, an electroluminescent element, a light emitting diode, an organic light emitting diode, an electrophoretic display element, a thin film transistor, a lens element of a photovoltaic element.

FIG. 1

FIG. 2

FIG. 3

FIG. 4

FIG. 5

FIG. 6

Fig. 7

Fig. 8

Fig. 9

Fig. 10

Fig. 11

## Fig. 12

Fig. 13

Fig. 14

Fig. 15

Fig. 16

# Fig. 17

Fig. 18

Europäisches
Patentamt

European
Patent Office

Office européen
des brevets

# EUROPEAN SEARCH REPORT

Application Number

EP 13 18 6277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/139582 A1 (VKR HOLDING AS [DK]; NOERGAARD HENRY [DK]) 18 October 2012 (2012-10-18) | 1,4,7-11 | INV. B29C70/52 |
| Y | * page 13, line 8 - page 15, line 4 * * page 16, line 21 - line 27 * * figures 1, 4 * | 2 | ADD. H01L29/78 |
| X | US 4 601 932 A (STEEL JOHN B [GB]) 22 July 1986 (1986-07-22) | 1,3,5,6, 10,14 | |
| Y | * abstract * * figure 1 * * column 3, line 45 - column 4, line 15 * * column 4, line 50 - line 54 * | 12,13 | |
| X | US 2013/234135 A1 (MOCHIZUKI FUMIHIKO [JP] ET AL) 12 September 2013 (2013-09-12) | 15 | |
| Y | * abstract * * paragraph [0056] - paragraph [0071]; figure 1A * | 12 | |
| Y | US 2006/177591 A1 (RADAY ROBERT M [US]) 10 August 2006 (2006-08-10) * abstract * | 2 | TECHNICAL FIELDS SEARCHED (IPC) B29C B29B H01L |
| Y | EP 1 116 575 A2 (JAMCO CORP [JP]) 18 July 2001 (2001-07-18) * abstract * * paragraph [0013] - paragraph [0019] * * figures 3, 4 * | 13 | |

The present search report has been drawn up for all claims

| Place of search | Date of completion of the search | Examiner |
|---|---|---|
| The Hague | 4 March 2014 | Lozza, Monica |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 18 6277

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2014

| Patent document cited in search report | | | Publication date | | Patent family member(s) | | Publication date |
|---|---|---|---|---|---|---|---|
| WO 2012139582 | A1 | | 18-10-2012 | EP | 2697042 | A1 | 19-02-2014 |
| | | | | WO | 2012139582 | A1 | 18-10-2012 |
| US 4601932 | A | | 22-07-1986 | AU | 7941082 | A | 29-07-1982 |
| | | | | DE | 3275456 | D1 | 02-04-1987 |
| | | | | EP | 0056689 | A2 | 28-07-1982 |
| | | | | ES | 276020 | U | 01-06-1984 |
| | | | | JP | H0117451 | B2 | 30-03-1989 |
| | | | | JP | S57146625 | A | 10-09-1982 |
| | | | | US | 4601932 | A | 22-07-1986 |
| | | | | ZA | 8200317 | A | 29-12-1982 |
| US 2013234135 | A1 | | 12-09-2013 | JP | 2012094757 | A | 17-05-2012 |
| | | | | KR | 20130139950 | A | 23-12-2013 |
| | | | | US | 2013234135 | A1 | 12-09-2013 |
| | | | | WO | 2012057020 | A1 | 03-05-2012 |
| US 2006177591 | A1 | | 10-08-2006 | CA | 2535149 | A1 | 04-08-2006 |
| | | | | EP | 1688231 | A1 | 09-08-2006 |
| | | | | US | 2006177591 | A1 | 10-08-2006 |
| EP 1116575 | A2 | | 18-07-2001 | DE | 60118048 | T2 | 28-09-2006 |
| | | | | EP | 1116575 | A2 | 18-07-2001 |
| | | | | ES | 2258039 | T3 | 16-08-2006 |
| | | | | JP | 3400399 | B2 | 28-04-2003 |
| | | | | JP | 2001191418 | A | 17-07-2001 |
| | | | | US | 2001007684 | A1 | 12-07-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010104191 A
- WO 2011062290 A
- US 20100216912 A
- US 20100009149 A
- US 7132154 B2
- US 20070219309 A
- US 7250209 B
- US 20100178478 A1
- US 20110052890 A1
- TW 201041945 A1
- WO 2008125200 A